# EUROPEAN PATENT SPECIFICATION

(11) **EP 1 959 607 B1**
(45) Date of publication and mention of the grant of the patent: **09.03.2016**
(21) Application number: 06791171.9
(22) Date of filing: 29.09.2006
(51) Int. Cl.: H04L 29/06, H04L 9/32

(54) **A METHOD AND SYSTEM FOR AUTHENTICATING THE IDENTITY**
VERFAHREN UND SYSTEM ZUM AUTHENTIFIZIEREN DER IDENTITÄT
PROCÉDÉ ET SYSTÈME D'AUTHENTIFICATION D'IDENTITÉ

(30) Priority: 07.12.2005 CN 200510102263
(43) Date of publication of application: 20.08.2008
(73) Proprietor: Huawei Technologies Co., Ltd., Longgang District Shenzhen, Guangdong 518129 (CN)
(72) Inventor: HE, Junhong, Guangdong 518129 (CN); CHEN, Bing, Guangdong 518129 (CN)
(74) Representative: Pfenning, Meinig & Partner mbB
(86) International application number: PCT/CN2006/002585
(87) International publication number: WO 2007/065333

(56) References cited:
- EP-A2- 1 501 256
- CN-A- 1 350 382
- CN-A- 1 501 656
- JP-A- 2001 243 196
- US-A1- 2003 005 117
- US-A1- 2004 168 049
- US-B1- 6 510 236

## Description

### Field of the Invention

The present invention relates to an authentication technology in the field of communication; and in particularly to a method and system for authenticating the identity.

### Background of the Invention

In order to ensure security and reliability of a communication procedure, it is important and essential to authenticate an authenticity of a communication partner. An effective identity (ID) authentication technology has gradually become a critical part of network security technology in a communication network.

The identity authentication technology may be used to protect critical applications, databases, files or websites, such as on-line banking, on-line agencies, electronic transactions etc. Further, many home office users, travelling users and mobile subscribers rely on remote access to information resources, which makes ID authentication of remote users more and more important. Meanwhile, it is necessary to authenticate users logged in from local area networks in order to protect key network operating systems and platforms.

That is to say, whoever it may_be, an employee, a business partner or a customer, it is always likely that they would need ID authentication technology, no matter whether they are located locally, remotely or in a mobile office. Reliable ID authentication technology helps to ensure that only authorized users can get access to a network, when receiving/sending emails, accessing network directories and other information or applications provided in a UNIX server or NT network.

In the prior art, in the course of a communication, all communication parties prove their own identity and verify whether the ID information provided by a corresponding communication party matches with information about themselves through ID authentication mechanism.

JP 2001 243196 A discusses an AP (application) authentication process authenticating an AP server by a client system, an AP server- authentication server authentication process authenticating mutually between the AP server and an authentication server, an IC card - authentication server mutual authentication process authenticating mutually between the IC card and the authentication server through a telephone line by inserting the card to the IC card reader, a disposable authentication key issue process issuing by the server in the case of success of the mutual authentication between the card 20 and the server, a disposable authentication key informing process informing the issued disposable authentication key to a user through the telephone line of a mobile telephone, then the disposable key is used by the user as the personal authentication key for onetime transaction.

US 2003/0005117 A1 discusses pluggable authentication and access control modules that are exchangeable to support a variety of authentication types, user repositories and access control models.

US 6,510,236 B1 discusses an authentication framework for authenticating clients, each of which is coupled to an authentication device of one of a plurality of permitted authentication device types.

Conventional authentication mechanisms include RADIUS (Remote Authentication Dial-In User Service) Authentication, an authentication mechanism based on DCE/Kerberos (Distributed Computing Environment/ Kerberos, an industrial standard security authentication adapted for performing distributed computing over a public network), an authentication mechanism based on a public key, an authentication mechanism based on challenge/ response, and so on.

In currently widely-used ID authentication technologies, a certificate administration public key is used; the public key and other identification information of a user are bound together by a trusted third party, i.e., an authentication center, so as to verify the user's identity. The other identification information may be a name, an email address, ID-number etc. A general method is to use a digital certification based on a public key to encrypt and sign the digital information to be transmitted so as to ensure the secure transmission of the information.

The public key based ID authentication mechanism mainly relies on the digital certification to verify the ID information about the partner. However, the ID identification information in the digital certification issued by the authentication center is fixed after issuing the certification, which makes the ID information lack varieties. If contents or ID properties not included in the authentication digital certificate are needed by both parties, then it is impossible for conventional identity authentication methods to fulfill such needs. It is explained in the following through an authentication procedure of a digital certificate.

Both parties obtain the partner's digital certificates from an authentication center, and verify digital signatures of the digital certificates against a root certificate of the authentication center, to ensure that the digital certificates are trustable. Then each of the parties uses the public key in the digital certificate to perform encryption and communication with the partner, identifies the identity of the partner, and links the ID identification in the digital certificate with the communication partner. Generally, the ID authentication is finished by now and the next stage of communication will follow. The conventional identity authentication schemes can substantially realize ID authentication and guarantee the privacy, authenticity, integrity and non-repudiation of the transmitted information, thus ensuring secure transmission of the information.

Though solutions in the prior art can meet the requirements to a certain extent, they still have following drawbacks:
- node resources in the network are not fully used, because, during using the solutions, a user's identity certificate must be issued by a special certificate authority;
- the information in the certificate is limited and fixed, because the certificate information is provided in conformity with fixed content items. Thus, the identity information to be authenticated is limited and fixed, and cannot meet the requirement of personalization, which makes the communication lack active participation of the entities as well as flexibility and lack user experience, because, on meeting the security requirement, both authentication parties would prefer to be more involved and enjoy more flexibility and interaction. Furthermore, they would prefer authenticated contents to be varied and personalized.

### Summary of the Invention

The present invention provides a method and system for identity authentication, which make authenticated information varied and personalized.

According to one aspect of the present invention, an identity authentication method for communication of a first communication party and a second communication party, the first and second communication parties being communication partners is provided, which includes:
negotiating, by both communication parties, with each other to select an identity authentication manner and a common node, wherein when selecting the identity authentication manner, selectable authentication conditions include: taking a basic information as an identity authentication information, taking a personalized information as an identity authentication information, or taking the basic information and personalized information as an identity authentication information; and
performing, by the communication parties, the identity authentication via the selected common node, by use of the selected identity authentication manner, wherein the identity authentication includes:
   exchanging, by the communication parties, public keys via the selected common node; and
   verifying, by each of the communication parties, the public key of its partner;
   obtaining, by the communication parties, the selected identity authentication information of its partner via the selected common node and
   verifying, by each of the communication parties, the obtained selected identity authentication information of its partner.

Alternatively, the step of the negotiating to select the identity authentication manner and the common node includes:
sending, by a first party of the communication parties, information about at least one identity authentication manner and at least one common node to a second party of the communication parties; and
selecting, by the second party, from the information the common node and the identity authentication manner, and sending information about the selected common node and the selected identity authentication manner to the first party.

Alternatively, when the identity authentication condition selected by the communication parties is taking the basic information as the identity authentication information, the step of performing the identity authentication via the selected common node includes:
obtaining by the communication parties the basic information about the partners; and
verifying, by each of the communication parties, the obtained basic information about its partner.

Alternatively, after each of the communication parties verifies the public key and the obtained basic information, the method further includes steps of:
searching, by each of the communication parties, for the verified basic information about its partner at a common node that is trusted by itself; and
comparing, by the communication parties, the verified basic information with the basic information obtained in the search, to determine a creditability of the information.

Alternatively, the common node is a node resource in an authentication center or a network.

Alternatively, when the identity authentication condition selected by the communication parties is taking the personalized information as the identity authentication information, the step of performing the identity authentication via the selected common node includes:
obtaining, by the communication parties, the personalized information about the partner; and
verifying, by each of the communication parties, the personalized information of its partner.

Alternatively, when the identity authentication condition selected by the communication parties is taking the basic information and the personalized information as the identity authentication information, the step of performing the identity authentication via the selected common node includes:
obtaining, by the communication parties, the basic information and the personalized information provided by the partners;
verifying, by each of the communication parties, the obtained basic information; and
verifying, by each of the communication parties, the personalized information of its partner.

Alternatively, the step of verifying the personalized information includes:
sending, by the first party, a verification request of the personalized information to the second party;
sending, by the second party, the verification request to a second common node;
sending, by the second common node, to the first party the personalized information about the second party which corresponds to the verification request; and
confirming, by the first party, the identity of the second party according to the personalized information about the second party.

Alternatively, the first common node is a node resource in an authentication center or a network, and the second common node is a node resource in a network.

Alternatively, the method further includes the step of:
while the first party verifies the personalized information about the second party from the second common node, sending, by the first party, to a trusted common node a request for searching for information about the second party, and comparing the information obtained in the search with the personalized information.

According to another aspect of the present invention, an identity authentication system is provided, which includes: a first party, a communication network, a second party coupled to the first party via the communication network, and common nodes connected with the first and second parties via the communication network, the system further includes: an authentication negotiation apparatus and an information authentication apparatus, wherein:
the authentication negotiation apparatus is configured to receive information about selectable identity authentication manners and common nodes from the first party, receive information about an identity authentication manner and a common node selected by the second party, from the second party, and output information about an identity authentication manner and a common node determined by the communication parties, wherein when selecting the identity authentication manner, selectable conditions comprise : taking a basic information as an identity authentication information, taking a personalized information as an identity authentication information, or taking the basic information and the personalized information as an identity authentication information; and
the first and second parties are configured to perform identity authentication by means of the information authentication apparatus, according to the information output by the authentication negotiation apparatus wherein
the communication parties exchange public keys via a common node outputted by the authentication negotiation apparatus and
the communication parties obtain the identity authentication manner of its partner outputted by the authentication negotiation apparatus and
each of the communication parties verifies the public key of its partner and the identity authentication information of its partner using the information authentication apparatus.

Alternatively, the information authentication apparatus includes: a basic information authentication unit and a personalized identity information authentication unit;
each of the first and second parties obtains basic information about its partner from a first common node, and verifies an authenticity of the basic information about its partner from the first common node, via the basic information authentication unit; and
each of the first and second parties verifies an authenticity of a personalized information about its partner from a second common node, via the personalized identity information authentication unit.

Alternatively, the system further includes:
a search and comparison apparatus being configured to compare information obtained in a search with a signal output from the basic information authentication apparatus to determine a similarity between them, so as to determine whether the identity of each communication party is credible.

In the present invention, nodes of both communication parties negotiate on ID authentication manners, which makes the ID authentication manners more varied, flexible and convenient. The communication parties make full use of the node resources in the network during the ID authentication procedure and do not rely on any special third-party certification authority. Thus, the requirement of personalization is met and more active participation of users is provided.

Furthermore, the second party poses the authentication request of the personalized information to the first party according to its own requirement, no need to be confined to the fixed and unvaried authentication contents provided by the authentication center of prior arts, which thus meets the requirements of acquiring varied and personalized information content required by communication nodes and enhances user experience and interaction. Moreover, the first party is allowed to search for information on the second party voluntarily, network nodes are fully used, and obtained identity information is more authentic and reliable.

### Brief Description of the Drawings

Fig. 1 is a chart showing a basic principle of an embodiment of the ID authentication method of the present invention;
Fig. 2 is a schematic chart showing an authentication of a first party in an embodiment of the present invention;
Fig. 3 is a schematic chart showing an authentication of a second party in an embodiment of the present invention; and
Fig. 4 is a block diagram showing an embodiment of an ID authentication system of the present invention.

### Detailed Description of the Invention

The embodiments of the ID authentication method of the present invention take advantage of common node resources, such as governmental bureaus, clubs, schools, banks and carriers, to send contents and identity characteristics of the ID information about both communication parties and required by both nodes of the communication parties. These common node resources provide authoritative and fair information, and provide trusty ID authentication information. Thus the common node resources in the network are fully used, which makes the authentication information varied and personalized, and meet the requirements of both communication parties. As a result, entities of the communication parties are provided with more active participation, and enjoy more flexibility and interaction.

Next, a basic principle and solutions of embodiments of the identity authentication method of the present invention will be explained with reference to the drawings.

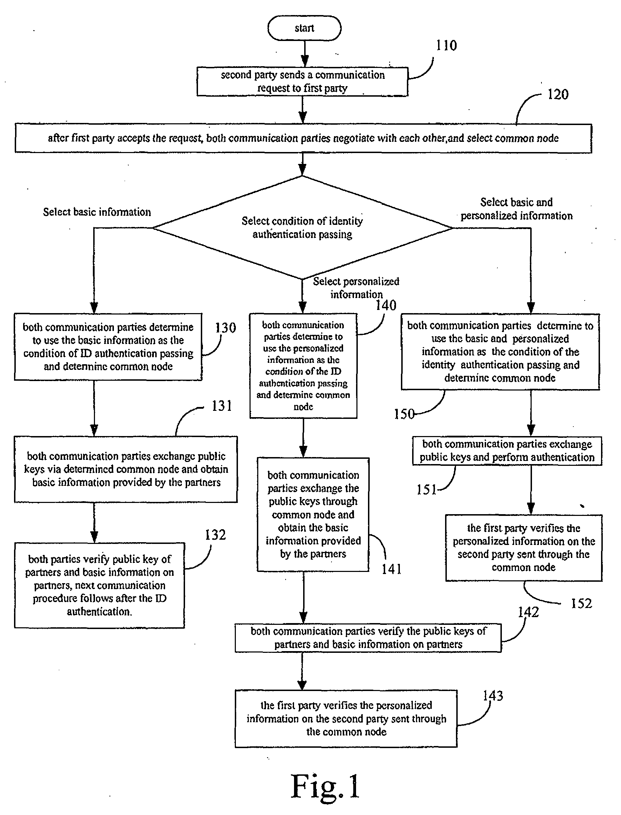

Fig. 1 shows a flow chart of one embodiment of the present invention. An exemplary solution of a second party initiating a communication with a first party will be described in this embodiment.

At Step 110, the second party sends to the first party a communication request indicating that it wishes to establish a communication with the first party, with the communication request sending in a plain text.

Step 120, after receiving the communication request from the second party, if the first party agrees to establish the communication, then the communication parties negotiate with each other, so as to select an ID authentication manner and a common node providing ID authentication information.

The ID authentication manner negotiated by the parties may be an ID authentication of basic information by special certificate authorities in general instances, may be an ID authentication of basic information by node resources in the network, may also be an ID authentication of personalized information by certificate authorities or node resources in the network; or may be an ID authentication of basic information and personalized information by certificate authorities or node resources in the network.

That is to say, the common node performing ID authentication of both communication parties may be a certificate center or node resources in the network; the node resources in the network may be common node resources in a network, such as governmental bureaus, clubs, banks, carrier, schools, and so on, which can provide information about identities of communication parties and certificates of identity characteristics, and which is authoritative, fair and trusty.

The so-called personalized information includes all information related to an identity of an authenticated party, and is provided by a node resource in a network selected by the authenticated party. Generally, the node resource is considered, by the authenticated party, as a network node resource which knows the information about itself to the greatest extent.

At Step 130, the negotiation result of both communication parties is that the ID authentication of the basic information is performed through the selected common node.

At Step 131, both communication parties exchange public key at the selected common node and obtain the basic information provide by the partner.

At Step 132, both communication parties verify the public key of the partner and the basic information about the partner. The next stage of communication follows after the ID authentication.

In the step, the public key may be verified by use of a digital signature and public key encryption based on a public key mechanism. An information encryption method is not limited to a certain encryption mechanism; and a plurality of encryption algorithms in prior arts may be used to encrypt information.

After determining the authenticity of the public key, the first and second parties send ID authentication request to the common node in the network simultaneously. After receiving the authentication requests from both parties, the common node in the network sends the ID information about one of both parties to its partner, upon the request from the parties. The content of the authentication request includes the basic information about both parties.

At Step 140, the negotiation result of both communication parties is that an ID authentication of the personalized information is performed through the selected common node.

When the first party wishes to employ such authentication manner to get more detailed information on the second party to determine the authenticity of the identity of the second party, the first party receiving the communication request authenticates the personalized information about the second party sending the communication request.

At Step 141, both communication parties exchange the public key through/or not through the common node negotiated and selected by the parties, and obtain the basic information provided by the other partner.

At Step 142, both communication parties verify the public key of the partner and the basic information about the partner.

In the step, the public key may be verified by use of a digital signature and a public key encryption method based on a public key mechanism, or by use of other information encryption methods.

At Step 143, the first party verifies the personalized information about the second party sent through the common node.

In the step, after determining the authenticity of the public key, the first party sends the ID authentication request of the personalized information to the second party. The personalized information includes any information that the first party wants to get from the second party and can be used to verify the identity of the second party, and any information that the first party wishes to know. The personalized information may be personal information, identity characteristics information etc. For example, the first party wants to know whether the second party holds a certain diploma or degree or has a certain technical expertise. The authentication request is sent in a cryptograph form. After receiving the authentication request, the second party uses its own private key and the public key of the first party to decrypt the authentication request. Then the second party requests the ID authentication at the common node agreed between both parties according to the decrypted plain text. The common node provides the personal information matching with the ID authentication request sent by the second party.

After the common node in the network sending the personalized information about the second party to the first party, the first party determines the identity of the second party according to the personal information about the second party send by the common node, and decides if it will continue to communicate with the second party.

While comparing the information, the first party can also verify a credibility of a network node which is selected, by the second party, to send the personalized information.

While waiting for the authentication information sent by the first party, the second party can also search for the personal information about the first party at a network node that is trusted by itself, and compare the information obtained in the search with the information obtained from the common node, so as to determine whether a next communication procedure will be continued.

At Step 150, the negotiation result of both communication parties is that an ID authentication of the basic information and the personalized information is performed through the selected common node.

The identity authentication is performed based on the basic information and the personalized information. First, the ID authentication is performed based on the basic information at step 151. After verification of the basic information, a verification based on the personalized information is performed at step 152.

After the verification of the basic information and the personalized information, the first party can search for information on the second party by its own. The first party then compares the basic information provided by the common node trusted by both parties with the information obtained in the search, so as to determine the reliability of the information and confirm the reliability of the identity of the second party. If the first party trusts the ID of the second party after the credibility comparison, a next communication procedure will be continued.

Next, for better understanding the present invention, the flowcharts of the operation procedures of the first and second parties will be explained.

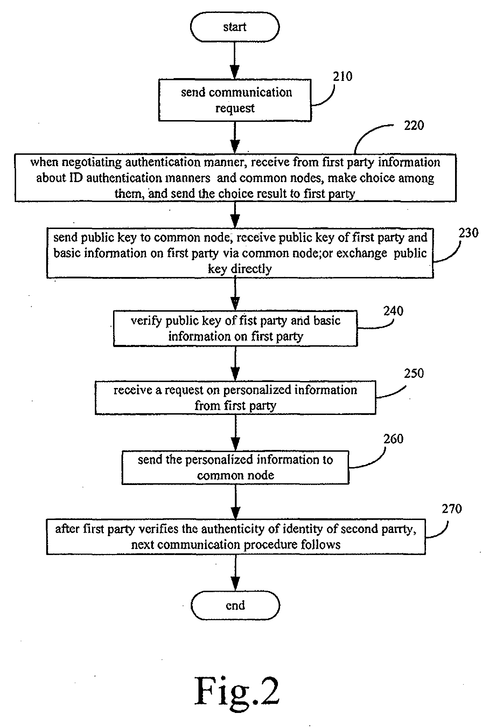

Fig. 2 shows a flowchart of the ID authentication of the first party in an embodiment of the present invention.

At step 210, the second party wants to communicate with the first party, and sends a communication request indicating that he wishes to establish a communication to the first party. The communication request is sent in a plain text.

Next, the second party waits for a response from the first party. If the first party accepts the request, he would sends to the second party the information about at least one ID authentication manner and at least one common node trusted by the first party, in a plain text.

At step 220, the second party selects an authentication manner and a common node trusted by the second party, from the ID authentication manners and common nodes provided by the first party, as an ID authentication condition and an authentication node.

In network communication, the authentication manner is determined by negotiation, network node resources are fully used, so as to overcome the disadvantage of performing authentication only through certificate authorities in prior arts. Moreover, the network node resources can provide not only the basic information but also other more detailed and abundant information, such as ID characteristics and personal information about both communication parties.

At step 230, the second party sends the public key to the common node selected by both parties, and downloads, from the common node, the public key of the first party and basic ID information on the first party.

Of course, both parties can exchange public keys directly, if they select not to authenticate the basic ID information.

At step 240, the second party verifies the public key of the first party and the basic personal information on the first party, for example, by use of digital signature and public key encryption manner based on PKI (Public Key Infrastructure), or in combination with some other authentication methods, such as a challenge/response manner.

At step 250, after the verification is true, the second party will receive a request on personalized information from the first party if the basic information about the second party does not conform to the requirement of the first party. The information about the request is encrypted with the private key of the first party and the public key of the second party, so as to ensure that it will not be tampered.

At step 260, the second party requests ID information authentication at the common node according to the requirement of the first party. The common node is authoritative, fair and reliable.

At step 270, the second party waits for the determination from the first party. If the ID information is accepted by the first party, a next communication procedure will be continued. Otherwise, it will be rejected to perform the next communication procedure.

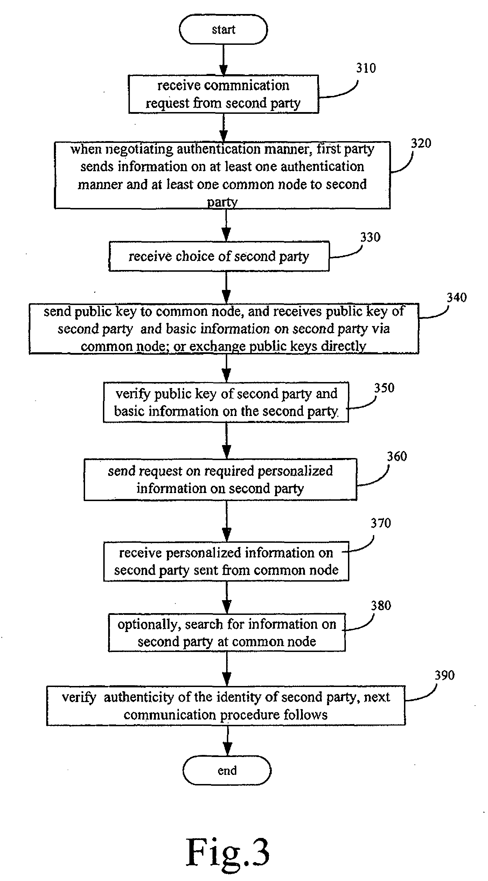

Fig. 3 shows a flowchart of the ID authentication of the second party in one embodiment of the present invention.

At step 310, the first party receives a communication request in a plain text, from the second party.

At step 320, both parties negotiate on the ID authentication manner. The first party sends information about several authentication manners and trusted common nodes to the second party in a plain text.

At step 330, the first party receives the information about the authentication manner and the common node selected by the second party in a plain text.

At step 340, the first party sends the public key to the common node selected by both parties and downloads from the common node the public key of the second party and the basic identity information about the second party.

Of course, both parties can exchange the public keys directly if they select not to authenticate the basic ID information.

At step 350, the public key of the second party and basic ID information on the second party are verified, for example, by use of a digital signature and a public key encryption manner based on PKI (Public Key Infrastructure), or in combination with some other authentication manners, such as a challenge/ response manner.

At step 360, after the verification is true, if the obtained basic information on the second party does not conform to the requirement of the first party, the first party may require that the identity information of interest about the second party is authenticated. The required information is encrypted with the private key of the first party and the public key of the second party, so as to ensure that it will not be tampered.

At step 370, the first party receives the personalized ID authentication information on the second party.

Now it can proceed to step 380. In the step, the first party may search for the ID information about the second party at a common node selected and trusted by itself. Or step 380 may be omitted.

At step 390, the first party verifies the authenticity of the identity of the second party. If it is authentic, the next communication procedure will be continued.

In this step, the first party can compare the creditability of the common nodes which provide the ID information proof according to the request of the second party. When step 380 is selected and performed, the first party can compare the ID information about the second party obtained by itself in the search with the basic information on the second party. The more similar contents of the two pieces of information are, the higher the accordance between the two pieces of information is.

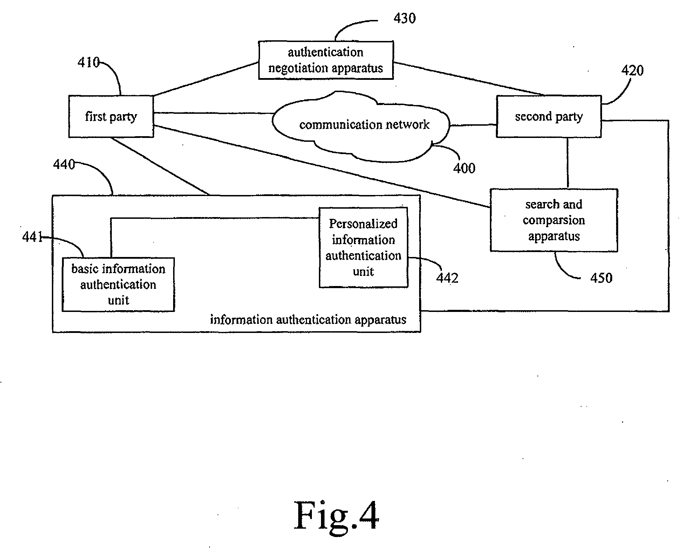

Fig. 4 shows a block diagram of an embodiment of the ID authentication system of the present invention. The system includes: a first party 410, a communication network 400, a second party 420 coupled to the first party 410 via the communication network 400 and a common node (not shown in the figure) connected with the first and second parties 410 and 420 via the communication network 400.

The system further includes an authentication negotiation apparatus 430, an information authentication apparatus 440, and a search and comparison apparatus 450, all of which logically coupled to the first arid second parties 410 and 420.

In the system, the authentication negotiation apparatus 430 receives from the first party 410 an authentication request, and receives from the second party 420 the accepted information. The communication parties negotiate with each other via the authentication negotiation apparatus 430, to select basic information, personalized information, or basic information and personalized information as a condition that the ID authentication passes, to select the common node, and to output the information about the condition that the ID authentication passes and the common node determined by both communication parties.

The information authentication apparatus 440 is coupled with the authentication negotiation apparatus 430, and is configured to receive the information about the authentication manner and the common node, output from the authentication negotiation apparatus 430. Both communication parties perform ID authentication by means of the information authentication apparatus 440.

In the embodiment, the information authentication apparatus 440 includes:
basic information authentication unit 441, by which the first and second parties obtain the basic information about the partner from the common node, and verify the basic information, when the output signal from the communication negotiation apparatus 430 indicates that an authentication of the basic information will be performed; and
personalized ID information authentication unit 442, by which the first party verifies the personalized information that is provide by the second party through the common node, when the output signal from the communication negotiation apparatus 430 indicates that authentication of the personalized identity information will be performed.

Both communication parties search for information about the partner at the common nodes by means of the search and comparison apparatus 450, and compare the information obtained in the search with the information output by the basic information authentication unit 441 to determine the similarity between both of them. Moreover, the first party searches for information about the second party at the common nodes via the search and comparison apparatus 450, and compare the information obtained in the search and the information output by the personalized ID information authentication unit 442 to determine the similarity between both of them, so as to determine whether the identity of each communication party is creditable.

## Claims

1. An identity authentication method for communication of a first communication party and a second communication party, the first and second communication parties being communication partners, comprising steps of:
negotiating (120), by both communication parties, with each other to select an identity authentication manner and a common node, wherein when selecting the identity authentication manner, selectable authentication conditions comprise: taking a basic information as an identity authentication information, taking a personalized information as an identity authentication information, or taking the basic information and the personalized information as an identity authentication information; and
performing, by the communication parties, the identity authentication via the selected common node, by use of the selected identity authentication manner;
**characterized in that** performing the identity authentication comprises the steps of:
exchanging, by the communication parties, public keys via the selected common node; and
verifying, by each of the communication parties, the public key of its partner;
obtaining, by the communication parties, the selected identity authentication information of its partner via the selected common node and
verifying, by each of the communication parties, the obtained selected identity authentication information of its partner.

2. The method of claim 1, wherein the step of negotiating to select the identity authentication manner and the common node comprises steps of:
sending, by a first party of the communication parties, information about at least one identity authentication manner and at least one common node to a second party of the communication parties; and
selecting, by the second party, from the information the common node and the identity authentication manner, and sending information about the selected common node and the selected identity authentication manner to the first party.

3. The method of claim 1, wherein when the identity authentication condition selected by the communication parties is taking the basic information as the identity authentication information, the step of performing the identity authentication via the selected common node comprises steps of:
obtaining, by the communication parties, the basic information about the partner; and
verifying, by each of the communication parties, the obtained basic information about its partner.

4. The method of claim 3, wherein after each of the communication parties verifies the public key of its partner and the obtained basic information about its partner, the method further comprises steps of:
searching, by each of the communication parties, for the verified basic information about its partner via a common node that is trusted by itself; and
comparing, by the communication parties, the verified basic information with the basic information obtained in the search, to determine a creditability of the information.

5. The method of claim 3 or 4, wherein the common node is a node resource in an authentication center or a network.

6. The method of claim 1, wherein when the identity authentication condition selected by the communication parties is taking the personalized information as the identity authentication information, the step of performing the identity authentication via the selected common node comprises:
obtaining, by the communication parties, the personalized information about the partner; and
verifying, by each of the communication parties, the personalized information of its partner.

7. The method of claim 1, wherein when the identity authentication condition selected by the communication parties is taking the basic information and the personalized information as the identity authentication information, the step of performing the identity authentication via the selected common node comprises steps of:
obtaining, by the communication parties, the basic information and the personalized information provided by the partners;
verifying, by each of the communication parties, the obtained basic information; and
verifying, by each of the communication parties, the personalized information of its partner.

8. The method of claim 6 or 7, wherein the step of verifying the personalized information comprises steps of:
sending, by the first party, a verification request of the personalized information to the second party;
sending, by the second party, the verification request to a second common node;
sending, by the second common node, to the first party the personalized information about the second party which corresponds to the verification request; and
confirming, by the first party, the identity of the second party according to the personalized information about the second party.

9. The method of claim 8, wherein the first common node is a node resource in an authentication center or a network, and the second common node is a node resource in a network.

10. The method of claim 8, further comprising the step of:
while the first party verifies the personalized information about the second party from the second common node, sending, by the first party, to a trusted common node a request for searching for information about the second party, and comparing the information obtained in the search with the personalized information.

11. An identity authentication system, comprising: a first party, a communication network, a second party coupled to the first party via the communication network, and common nodes connected with the first and second parties via the communication network, wherein the system further comprises: an authentication negotiation apparatus and an information authentication apparatus, wherein:
the authentication negotiation apparatus is configured to receive information about selectable identity authentication manners and common nodes from the first party, receive information about an identity authentication manner and a common node selected by the second party, from the second party, and output information about an identity authentication manner and a common node determined by the communication parties, wherein when selecting the identity authentication manner, selectable conditions comprise : taking a basic information as an identity authentication information, taking a personalized information as an identity authentication information, or taking the basic information and the personalized information as an identity authentication information; and
the first and second parties are configured to perform identity authentication by means of the information authentication apparatus, according to the information output by the authentication negotiation apparatus;
**characterized in that**
the communication parties exchange public keys via a common node outputted by the authentication negotiation apparatus and
the communication parties obtain the identity authentication manner of its partner outputted by the authentication negotiation apparatus and
each of the communication parties verifies the public key of its partner and the identity authentication information of its partner using the information authentication apparatus.

12. The identity authentication system of claim 11, wherein the information authentication apparatus comprises: a basic information authentication unit and a personalized identity information authentication unit;
wherein each of the first and second parties obtains basic information about its partner from a first common node, and verify an authenticity of the basic information about its partner from the first common node, via the basic information authentication unit; and
each of the first and second parties verifies an authenticity of a personalized information about its partner from a second common node, via the personalized identity information authentication unit.

13. The identity authentication system of claim 12, further comprising:
a search and comparison apparatus being configured to compare information obtained in a search with a signal output from the basic information authentication apparatus to determine a similarity between them, so as to determine whether the identity of each communication party is credible.

## Patentansprüche

1. Identitätsauthentifizierungsverfahren für die Kommunikation eines ersten Kommunikationsteilnehmers und eines zweiten Kommunikationsteilnehmers, wobei der erste und der zweite Kommunikationsteilnehmer Kommunikationspartner sind, das die folgenden Schritte umfasst:
Verhandeln (120) durch beide Kommunikationsteilnehmer miteinander, um eine Identitätsauthentifizierungsart und einen gemeinsamen Knoten auszuwählen, wobei auswählbare Authentifizierungsbedingungen, wenn die Identitätsauthentifizierungsart ausgewählt wird, Folgendes umfassen: Annehmen einer Basisinformation als eine Identitätsauthentifizierungsinformation, Annehmen einer personalisierten Information als eine Identitätsauthentifizierungsinformation oder Annehmen der Basisinformation und der personalisierten Information als eine Authentifizierungsinformation; und
Ausführen durch die Kommunikationsteilnehmer der Identitätsauthentifizierung über den ausgewählten gemeinsamen Knoten durch Verwenden der ausgewählten Identitätsauthentifizierungsart;
**dadurch gekennzeichnet, dass** das Ausführen der Identitätsauthentifizierung die folgenden Schritte umfasst:
Austauschen durch die Kommunikationsteilnehmer von öffentlichen Schlüsseln über den ausgewählten gemeinsamen Knoten; und
Verifizieren durch jeden der Kommunikationsteilnehmer des öffentlichen Schlüssels seines Partners;
Erhalten durch die Kommunikationsteilnehmer der ausgewählten Identitätsauthentifizierungsinformation seines Partners über den ausgewählten gemeinsamen Knoten und
Verifizieren durch jeden der Kommunikationsteilnehmer der erhaltenen ausgewählten Identitätsauthentifizierungsinformation seines Partners.

2. Verfahren nach Anspruch 1, wobei der Schritt des Verhandelns, um die Identitätsauthentifizierungsart und den gemeinsamen Knoten auszuwählen, die folgenden Schritte umfasst:
Senden durch einen ersten Teilnehmer aus den Kommunikationsteilnehmern von Informationen über wenigstens eine Identitätsauthentifizierungsart und wenigstens einen gemeinsamen Knoten zu einem zweiten Teilnehmer aus den Kommunikationsteilnehmern; und
Auswählen durch den zweiten Teilnehmer aus den Informationen des gemeinsamen Knotens und der Identitätsauthentifizierungsart und Senden von Informationen über den ausgewählten gemeinsamen Knoten und die ausgewählte Identitätsauthentifizierungsart zu dem ersten Teilnehmer.

3. Verfahren nach Anspruch 1, wobei, wenn die Identitätsauthentifizierungsbedingung, die durch die Kommunikationsteilnehmer ausgewählt ist, ist, die Basisinformation als die Identitätsauthentifizierungsinformation anzunehmen, der Schritt des Ausführens der Identitätsauthentifizierung über den ausgewählten gemeinsamen Knoten die folgenden Schritte umfasst:
Erhalten durch die Kommunikationsteilnehmer der Basisinformation über den Partner; und
Verifizieren durch jeden der Kommunikationsteilnehmer der erhaltenen Basisinformation über seinen Partner.

4. Verfahren nach Anspruch 3, wobei das Verfahren, nachdem jeder der Kommunikationsteilnehmer den öffentlichen Schlüssel seines Partners und die erhaltene Basisinformation über seinen Partner verifiziert hat, ferner die folgenden Schritte umfasst:
Suchen durch jeden der Kommunikationsteilnehmer nach der verifizierten Basisinformation über seinen Partner über einen gemeinsamen Knoten, der für ihn selbst vertrauenswürdig ist; und
Vergleichen durch die Kommunikationsteilnehmer der verifizierten Basisinformation mit der Basisinformation, die in der Suche erhalten ist, um eine Glaubwürdigkeit der Information zu bestimmen.

5. Verfahren nach Anspruch 3 oder 4, wobei der gemeinsame Knoten ein Knotenbetriebsmittel in einem Authentifizierungszentrum oder einem Netz ist.

6. Verfahren nach Anspruch 1, wobei, wenn die Identitätsauthentifizierungsbedingung, die durch die Kommunikationsteilnehmer ausgewählt ist, ist, die personalisierte Information als die Identitätsauthentifizierungsinformation anzunehmen, der Schritt des Ausführens der Identitätsauthentifizierung über den ausgewählten gemeinsamen Knoten die folgenden Schritte umfasst:
Erhalten durch die Kommunikationsteilnehmer der personalisierten Information über den Partner; und
Verifizieren durch jeden der Kommunikationsteilnehmer der personalisierten Information seines Partners.

7. Verfahren nach Anspruch 1, wobei, wenn die Identitätsauthentifizierungsbedingung, die durch die Kommunikationsteilnehmer ausgewählt ist, ist, die Basisinformation und die personalisierte Information als die Identitätsauthentifizierungsinformation anzunehmen, der Schritt des Ausführens der Identitätsauthentifizierung über den ausgewählten gemeinsamen Knoten die folgenden Schritte umfasst:
Erhalten durch die Kommunikationsteilnehmer der Basisinformation und der personalisierten Information, die durch die Partner bereitgestellt sind;
Verifizieren durch jeden der Kommunikationsteilnehmer der erhaltenen Basisinformation; und
Verifizieren durch jeden der Kommunikationsteilnehmer der personalisierten Information seines Partners.

8. Verfahren nach Anspruch 6 oder 7, wobei der Schritt des Verifizierens der personalisierten Information die folgenden Schritte umfasst:
Senden durch den ersten Teilnehmer einer Verifizierungsanforderung der personalisierten Information zu dem zweiten Teilnehmer;
Senden durch den zweiten Teilnehmer der Verifizierungsanforderung zu einem zweiten gemeinsamen Knoten;
Senden durch den zweiten gemeinsamen Knoten zu dem ersten Teilnehmer der personalisierten Information über den zweiten Teilnehmer, die der Verifizierungsanforderung entspricht; und
Bestätigen durch den ersten Teilnehmer der Identität des zweiten Teilnehmers gemäß der personalisierten Information über den zweiten Teilnehmer.

9. Verfahren nach Anspruch 8, wobei der erste gemeinsame Knoten ein Knotenbetriebsmittel in einem Authentifizierungszentrum oder einem Netz ist und der zweite gemeinsame Knoten ein Knotenbetriebsmittel in einem Netz ist.

10. Verfahren nach Anspruch 8, das ferner den folgenden Schritt umfasst:
während der erste Teilnehmer die personalisierte Information über den zweiten Teilnehmer von dem zweiten gemeinsamen Knoten verifiziert, Senden durch den ersten Teilnehmer zu einem vertrauenswürdigen gemeinsamen Knoten einer Anforderung zum Suchen nach Information über den zweiten Teilnehmer und Vergleichen der in der Suche erhaltenen Information mit der personalisierten Information.

11. Identitätsauthentifizierungssystem, das Folgendes umfasst: einen ersten Teilnehmer, ein Kommunikationsnetz, einen zweiten Teilnehmer, der mit dem ersten Teilnehmer über das Kommunikationsnetz gekoppelt ist, und gemeinsame Knoten, die mit dem ersten und dem zweiten Teilnehmer über das Kommunikationsnetz gekoppelt sind, wobei das System ferner Folgendes umfasst: eine Authentifizierungsverhandlungsvorrichtung und eine Informationsauthentifizierungsvorrichtung, wobei:
die Authentifizierungsverhandlungsvorrichtung konfiguriert ist, Informationen über auswählbare Identitätsauthentifizierungsarten und gemeinsame Knoten von dem ersten Teilnehmer zu empfangen, Informationen über eine Identitätsauthentifizierungsart und einen gemeinsamen Knoten, die durch den zweiten Teilnehmer ausgewählt sind, von dem zweiten Teilnehmer zu empfangen und Informationen über eine Identitätsauthentifizierungsart und einen gemeinsamen Knoten, die durch die Kommunikationsteilnehmer bestimmt sind, auszugeben, wobei, wenn die Identitätsauthentifizierungsart ausgewählt wird, auswählbare Bedingungen Folgendes umfassen: Annehmen einer Basisinformation als eine Identitätsauthentifizierungsinformation, Annehmen einer personalisierten Information als eine Identitätsauthentifizierungsinformation oder Annehmen der Basisinformation und der personalisierten Information als eine Identitätsauthentifizierungsinformation; und
der erste und der zweite Teilnehmer konfiguriert sind, Identitätsauthentifizierung mit Hilfe der Informationsauthentifizierungsvorrichtung gemäß den Informationen, die durch die Authentifizierungsverhandlungsvorrichtung ausgegeben werden, auszuführen;
**dadurch gekennzeichnet, dass**
die Kommunikationsteilnehmer öffentliche Schlüssel über einen gemeinsamen Knoten austauschen, die durch die Authentifizierungsverhandlungsvorrichtung ausgegeben werden, und
die Kommunikationsteilnehmer die Identitätsauthentifizierungsart ihres Partners, die durch die Authentifizierungsverhandlungsvorrichtung ausgegeben wird, erhalten, und jeder der Kommunikationsteilnehmer den öffentlichen Schlüssel seines Partners und die Identitätsauthentifizierungsinformation seines Partners unter Verwendung der Informationsauthentifizierungsvorrichtung verifiziert.

12. Identitätsauthentifizierungssystem nach Anspruch 11, wobei die Informationsauthentifizierungsvorrichtung Folgendes umfasst: eine Authentifizierungseinheit für Basisinformation und eine Authentifizierungseinheit für personalisierte Information;
wobei der erste und der zweite Teilnehmer Basisinformation über seinen Partner von einem ersten gemeinsamen Knoten erhält und eine Authentizität der Basisinformation über seinen Partner aus dem ersten Knoten über die Authentifizierungseinheit für Basisinformation verifiziert; und
der erste und der zweite Partner eine Authentizität einer personalisierten Information über seinen Partner von einem zweiten gemeinsamen Knoten über die Authentifizierungseinheit für personalisierte Identitätsinformation verifiziert.

13. Identitätsauthentifizierungssystem nach Anspruch 12, das ferner Folgendes umfasst: eine Such- und Vergleichsvorrichtung, die konfiguriert ist, Informationen, die in einer Suche erhalten werden, mit einem Signal zu vergleichen, das aus der Authentifizierungsvorrichtung für Basisinformation ausgegeben wird, um eine Ähnlichkeit zwischen ihnen zu bestimmen, um zu bestimmen, ob die Identität jedes Kommunikationsteilnehmers glaubwürdig ist.

## Revendications

1. Procédé d'authentification d'identité pour la communication d'un premier correspondant et d'un second correspondant, les premier et second correspondants étant des partenaires en communication, comprenant les étapes consistant en :
la négociation (120), par les deux correspondants, l'un avec l'autre pour sélectionner un mode d'authentification d'identité et un noeud commun, dans lequel lors de la sélection du mode d'authentification d'identité, des conditions d'authentification sélectionnables comprennent : l'utilisation d'informations de base comme informations d'authentification d'identité, l'utilisation d'informations personnalisées comme informations d'authentification d'identité, ou l'utilisation des informations de base et des informations personnalisées comme informations d'authentification d'identité ; et
l'exécution, par les correspondants, de l'authentification d'identité par l'intermédiaire du noeud commun sélectionné, en utilisant le mode d'authentification d'identité sélectionné ;
**caractérisé en ce que** l'exécution de l'authentification d'identité comprend les étapes consistant en :
l'échange, par les correspondants, de clés publiques par l'intermédiaire du noeud commun sélectionné ; et
la vérification, par chacun des correspondants, de la clé publique de son partenaire ;
l'obtention, par les correspondants, des informations d'authentification d'identité sélectionnées de son partenaire par l'intermédiaire du noeud commun sélectionné et
la vérification, par chacun des correspondants, des informations d'authentification d'identité sélectionnées obtenues de son partenaire.

2. Procédé selon la revendication 1, dans lequel l'étape de négociation pour sélectionner le mode d'authentification d'identité et le noeud commun comprend les étapes consistant en :
l'envoi, par un premier correspondant des correspondants, d'informations relatives à au moins un mode d'authentification d'identité et au moins un noeud commun à un second correspondant des correspondants ; et
la sélection, par le second correspondant, à partir des informations, du noeud commun et du mode d'authentification d'identité, et l'envoi d'informations relatives au noeud commun sélectionné et au mode d'authentification d'identité sélectionné au premier correspondant.

3. Procédé selon la revendication 1, dans lequel quand la condition d'authentification d'identité sélectionnée par les correspondants utilise les informations de base comme informations d'authentification d'identité, l'étape d'exécution de l'authentification d'identité par l'intermédiaire du noeud commun sélectionné comprend les étapes consistant en :
l'obtention, par les correspondants, des informations de base relatives au partenaire ; et
la vérification, par chacun des correspondants, des informations de base obtenues relatives à son partenaire.

4. Procédé selon la revendication 3, comprenant en outre, après que chacun des correspondants vérifie la clé publique de son partenaire et les informations de base obtenues relatives à son partenaire, les étapes consistant en :
la recherche, par chacun des correspondants, des informations de base vérifiées relatives à son partenaire par l'intermédiaire d'un noeud commun auquel il fait confiance ; et
la comparaison, par les correspondants, des informations de base vérifiées aux informations de base obtenues dans la recherche, pour déterminer une crédibilité des informations.

5. Procédé selon la revendication 3 ou 4, dans lequel le noeud commun est une ressource nodale dans un centre d'authentification ou un réseau.

6. Procédé selon la revendication 1, dans lequel quand la condition d'authentification d'identité sélectionnée par les correspondants utilise les informations personnalisées comme informations d'authentification d'identité, l'étape d'exécution de l'authentification d'identité par l'intermédiaire du noeud commun sélectionné comprend :
l'obtention, par les correspondants, des informations personnalisées relatives au partenaire ; et
la vérification, par chacun des correspondants, des informations personnalisées de son partenaire.

7. Procédé selon la revendication 1, dans lequel quand la condition d'authentification d'identité sélectionnée par les correspondants utilise les informations de base et les informations personnalisées comme informations d'authentification d'identité, l'étape d'exécution de l'authentification d'identité par l'intermédiaire du noeud commun sélectionné comprend les étapes consistant en :
l'obtention, par les correspondants, des informations de base et des informations personnalisées fournies par les partenaires ;
la vérification, par chacun des correspondants, des informations de base obtenues ; et la vérification, par chacun des correspondants, des informations personnalisées de son partenaire.

8. Procédé selon la revendication 6 ou 7, dans lequel l'étape de vérification des informations personnalisées comprend les étapes consistant en :
l'envoi, par le premier correspondant, d'une requête de vérification des informations personnalisées au second correspondant ;
l'envoi, par le second correspondant, de la requête de vérification à un second noeud commun ;
l'envoi, par le second noeud commun, au premier correspondant, des informations personnalisées relatives au second correspondant qui correspondent à la requête de vérification ; et
la confirmation, par le premier correspondant, de l'identité du second correspondant en fonction des informations personnalisées relatives au second correspondant.

9. Procédé selon la revendication 8, dans lequel le premier noeud commun est une ressource nodale dans un centre d'authentification ou un réseau, et le second noeud commun est une ressource nodale dans un réseau.

10. Procédé selon la revendication 8, comprenant en outre l'étape consistant en :
pendant que le premier correspondant vérifie les informations personnalisées relatives au second correspondant provenant du second noeud commun, l'envoi, par le premier correspondant, à un noeud commun de confiance, d'une requête de recherche d'informations relatives au second correspondant, et la comparaison des informations obtenues dans la recherche aux informations personnalisées.

11. Système d'authentification d'identité, comprenant : un premier correspondant, un réseau de communication, un second correspondant couplé au premier correspondant par l'intermédiaire du réseau de communication, et des noeuds communs connectés aux premier et second correspondants par l'intermédiaire du réseau de communication, le système comprenant en outre : un appareil de négociation d'authentification et un appareil d'authentification d'informations, dans lequel :
l'appareil de négociation d'authentification est configuré pour recevoir des informations relatives à des modes d'authentification d'identité sélectionnables et des noeud communs depuis le premier correspondant, recevoir des informations relatives à un mode d'authentification d'identité et un noeud commun sélectionnés par le second correspondant, depuis le second correspondant, et produire en sortie des informations relatives à un mode d'authentification d'identité et un noeud commun déterminés par les correspondants, dans lequel lors de la sélection du mode d'authentification d'identité, des conditions sélectionnables comprennent : l'utilisation d'informations de base comme informations d'authentification d'identité, l'utilisation d'informations personnalisées comme informations d'authentification d'identité, ou
l'utilisation des informations de base et des informations personnalisées comme informations d'authentification d'identité ; et
les premier et second correspondants sont configurés pour exécuter l'authentification d'identité au moyen de l'appareil d'authentification d'informations, en fonction des informations produites en sortie par l'appareil de négociation d'authentification ;
**caractérisé en ce que**
les correspondants échangent des clés publiques par l'intermédiaire d'un noeud commun produit en sortie par l'appareil de négociation d'authentification ; et
les correspondants obtiennent le mode d'authentification d'identité de son partenaire produit en sortie par l'appareil de négociation d'authentification et
chacun des correspondants vérifie la clé publique de son partenaire et les informations d'authentification d'identité de son partenaire en utilisant l'appareil d'authentification d'informations.

12. Système d'authentification d'identité selon la revendication 11, l'appareil d'authentification d'informations comprenant : une unité d'authentification d'informations de base et une unité d'authentification d'informations d'identité personnalisées ;
dans lequel chacun des premier et second correspondants obtient des informations de base relatives à son partenaire depuis un premier noeud commun, et vérifie une authenticité des informations de base relatives à son partenaire provenant du premier noeud commun, par l'intermédiaire de l'unité d'authentification d'informations de base ; et
dans lequel chacun des premier et second correspondants vérifie une authenticité des informations personnalisées relatives à son partenaire provenant d'un second noeud commun, par l'intermédiaire de l'unité d'authentification d'informations d'identité personnalisées.

13. Système d'authentification d'identité selon la revendication 12, comprenant en outre : un appareil de recherche et de comparaison configuré pour comparer les informations obtenues dans une recherche à un signal produit en sortie par l'appareil d'authentification d'informations de base pour déterminer une similarité entre eux, de manière à déterminer que l'identité de chaque correspondant est crédible.
